# EUROPÄISCHE PATENTSCHRIFT

(11) **EP 1 710 216 B1**
(45) Veröffentlichungstag und Bekanntmachung des Hinweises auf die Patenterteilung: **13.01.2016**
(21) Anmeldenummer: 05405683.3
(22) Anmeldetag: 02.12.2005
(51) Int. Cl.: C04B 35/119, C23C 4/10, F04B 39/12

(54) **KOMPRESSOR MIT EINER OBERFLÄCHENSCHICHT EINES KERAMISCHEN WERKSTOFFS UND DAS VERFAHREN SEINER HERSTELLUNG**
COMPRESSOR WITH A SURFACE LAYER OF A CERAMIC MATERIAL AND THE METHOD FOR ITS MAKING
COMPRESSEUR AVEC UNE COUCHE DE SURFACE D'UN MATÉRIAU CÉRAMIQUE ET SA MÉTHODE DE PRODUCTION

(30) Priorität: 07.04.2005 EP 05405283
(43) Veröffentlichungstag der Anmeldung: 11.10.2006
(73) Patentinhaber: Sulzer Metco AG, 5610 Wohlen (CH)
(72) Erfinder: Barbezat, Gérard, 8152 Opfikon (CH)
(74) Vertreter: Intellectual Property Services GmbH

(56) Entgegenhaltungen:
- EP-A- 0 497 542
- DE-A1- 3 012 515
- DE-A1- 4 040 975
- US-A- 4 492 766
- US-A- 4 992 396
- US-A1- 2004 142 812
- US-B1- 6 452 957
- PATENT ABSTRACTS OF JAPAN Bd. 013, Nr. 171 (C-588), 24. April 1989 (1989-04-24) & JP 64, 000258, A, (NIPPON STEEL CORP; OTHERS: 01), 5. Januar 1989 (1989-01-05)
- ANONYMOUS: "DIAMOCOR LINE OF HIGH-PURITY ALUMINA POWDERS", INTERNET ARTICLE, [Online] XP002346681, Gefunden im Internet: URL:http://www.sawyerresearch.com/prod41.h tm>
- CHEMICAL ABSTRACTS + INDEXES, AMERICAN CHEMICAL SOCIETY. COLUMBUS, US, Bd. 22, Nr. 114, 3. Juni 1991 (1991-06-03) , XP000191602, ISSN: 0009-2258
- PATENT ABSTRACTS OF JAPAN Bd. 2000, Nr. 1, 31. Januar 2000 (2000-01-31) & JP 11, 286768, A, (ISHIKAWAJIMA HARIMA HEAVY IND CO LTD), 19. Oktober 1999 (1999-10-19)

## Beschreibung

Die Erfindung betrifft ein Verfahren zum thermischen Beschichten eines Kompressors und einen Kompressor mit einer Oberflächenschicht.

Durch thermisches Spritzen aufgebrachte keramische Beschichtungen sind seit langem für eine Vielzahl von Anwendungen bekannt. So werden zum Beispiel Oberflächen von Öl geschmierten Zylinderlaufflächen in Fahrzeugmotoren bereits seit einiger Zeit unter anderem durch Plasmaspritzen beschichtet, wobei die Schicht vor allem den Reibungskoeffizienten, der zwischen Kolbenringen und Zylinderwand wirksam ist, deutlich reduziert, wodurch der Verschleiss von Kolbenringen und Zylinder deutlich reduziert wird, was zu einer Erhöhung der Laufleistung des Motors, einer Verlängerung der Wartungsintervalle, zum Beispiel beim Ölwechsel und nicht zuletzt zu einer merklichen Leistungssteigerung des Motors führt. Das wird durch unterschiedliche Massnahmen erreicht. Beispielsweise können solche Schichten für Öl geschmierte Verbrennungsmaschinen Einlagerungen von Trockenschmierstoffen in einer Grundmatrix enthalten, wobei in der Grundmatrix zusätzlich Poren von vorgebbarer Grösse vorgesehen sein können, die als Öltaschen fungieren und damit zusammen mit den relativ weichen eingelagerten Trockenschmierstoffen die Reibung zwischen Kolbenringen und Zylinderwand deutlich vermindern. Die Grundmatrix selbst, die unter weiteren Bestandteilen insbesondere die Trockenschmierstoffe und die Poren enthält, ist dabei aus einem harten Matrixmaterial aufgebaut, das eine hohe Lebensdauer der Zylinderlaufflächen und Kolbenringe garantiert. Eine solche moderne Hochleistungs-Zylinderlauffläche ist zum Beispiel in der EP 1 340 834 eingehend beschrieben.

Dokument DE4040975 zeigt ein Verfahren zur Herstellung eines Zylinderblockes. Mittels eines Flammspritzverfahrens wird eine Verschleissschicht auf der Oberfläche einer Trägerhülse aufgebracht. Diese Schicht enthält nichtmetallische Hartstoffe wie Al₂O₃, ZrO₂ und Cr₂O₃.

Dokument JP64000258 weist einen Werkstoff auf, in die Form einer Oberflächenschicht. Diese Oberflächenschicht ist durch thermisches Spritzen eines Spritzpulvers aufgebracht worden. Eine mögliche Zusammensetzung des Spritzpulvers und der Oberflächenschicht ist 27,6 Gew.-% ZrO₂, 49 Gew.-% Al₂O₃, 21 Gew.-% Cr₂O₃ und 2,4 Gew.-% Y₂O₃.

Weitere typische Anwendungen für durch thermisches Spritzen aufgebrachte Oberflächen ist das Beschichten von Turbinenteilen mit Verschleissschutz- und Wärmedämmschichten, von Komponenten von Öl geschmierten Lagern, wie z.B. die Beschichtung von Kurbellagern oder anderen Werkstücken, die besonderen physikalischen, chemischen oder thermischen Belastungen ausgesetzt sind. Je nach dem welchen Zweck die Schicht zu erfüllen hat, kommen ganz bestimmte Werkstoffe, in der Regel in Form von Spritzpulvern oder Spritzdrähten zum Einsatz, die die notwendigen spezifischen Eigenschaften und Zusammensetzung besitzen, um die erforderlichen Eigenschaften der zu spritzenden Oberflächenschicht zu generieren.

Während die zuvor erwähnten hoch entwickelten Werkstoffe zur Erzeugung von Oberflächenschichten im Falle von Öl geschmierten Anwendungen zu hervorragenden Ergebnissen in der technischen Anwendung führen, sind diese Werkstoffe jedoch für den Fall, dass der Einsatz von Schmiermitteln vermieden werden soll, völlig ungeeignet, da diese Werkstoffe eben gezielt auf den Einsatz von in Öl geschmierten Anwendungen entwickelt wurden. Ein wichtiges Beispiel für eine Anwendung, bei der der Einsatz von Schmierflüssigkeit erhebliche Nachteile bringt, sind Kompressoren zum Komprimieren von Gasen. Solche Kompressoren sind in ganz verschiedenen Ausführungsformen, z.B. als Kreiskolbenkompressoren oder als Hubkolbenkompressoren wohlbekannt. Insbesondere die Hubkolbenkompressoren sind weit verbreitet und haben in verschiedensten Ausführungsformen, z.B. als einstufige Kompressoren, wenn keine allzu hohen Drücke erzeugt werden müssen oder als mehrstufige Kompressoren, vor allem in Hochdruckanwendungen, eine hohe technische Bedeutung.

Sie können dabei zum Komprimieren aller möglichen Gase eingesetzt werden, angefangen von gewöhnlicher Umgebungsluft, über reinen Sauerstoff, Stickstoff, Erdgas, Edelgase, Wasserstoff oder jedes andere Gas oder Gasgemisch. Es versteht sich, dass je nach dem welches Gas zu komprimieren ist bzw. in welchem Druckbereich die komprimierten Gase zur Verfügung gestellt werden müssen, die konkreten baulichen und technischen Ausgestaltungen der eingesetzten Kompressoren variieren. Alle diese Arten von Kompressoren sind im Prinzip seit langen wohl bekannt, so dass deren speziellen technische Details an dieser Stelle nicht weiter diskutiert werden müssen.

Im Prinzip umfasst ein Hubkolbenkompressor im wesentlichen einen Zylinder, in welchem zum Komprimieren eines Gases ein Kolben, ganz ähnlich wie bei einer Hubkolbenbrennkraftmaschine, hin- und herbewegbar angeordnet ist. Der Kompressionsraum wird dann durch die Wand des Zylinders, den darin beweglich angeordneten Kolben und einen Zylinderdeckel begrenzt. Die Bewegung des Kolbens im Zylinder wird über eine mit einer Kurbelwelle verbundene Pleuelstange generiert, wobei die Kurbelwelle zum Beispiel über einen Motor, z.B. einen Elektromotor oder durch Kopplung an einen Verbrennungsmotor oder an eine andere Antriebseinheit, angetrieben wird.

Wenn der Kolben sich in der Nähe einer unteren Totpunkstellung befindet, wird in den Kompressionsraum das zu komprimierende Gas eingeleitet und während eines anschliessenden Kompressionshubes, bei welchem das Volumen des Kompressionsraum durch eine Bewegung des Kolbens in Richtung seiner oberen Totpunktstellung stark verkleinert wird, das Gas im sich verkleinernden Volumen des Kompressionsraums zu einem höheren Druck komprimiert. In der Nähe des oberen Totpunkts wird dann das unter dem erhöhten Druck stehende Gas über ein Ventil z.B. in eine weitere Kompressionsstufe zur weiteren Druckerhöhung weitergeleitet oder, wenn der Druck genügend hoch ist, beispielsweise einem Druckbehälter zugeführt, wo es dann zur weiteren Verwendung zur Verfügung steht.

Damit beim Kompressionshub des Kolbens, das heisst bei der Verkleinerung des Volumens des Kompressionsraums durch die Bewegung des Kolbens in Richtung des oberen Totpunkt, ein genügend hoher Druck erzeugt werden kann, muss insbesondere der Kolben gegen die Zylinderwand, in der der Kolben in axialer Richtung bei seiner Bewegung geführt ist, möglichst gut abgedichtet sein. Dazu verfügt der Kolben in der Regel über als Kolbenringe ausgestaltete Dichtringe, die in wohl bekannter Weise in einer um den Kolben umlaufenden Nut eingebettet sind und unter einer gewissen radialen Vorspannung stehen, so dass der Dichtring mit einer bestimmten Kraft gegen die Lauffläche der Zylinderwand gepresst wird, wodurch ein dichtender Effekt hervorgerufen wird, so dass das im Zylinder eingeschlossene Gas auf einen vorgebbaren Druck komprimierbar ist. Meist sind mehrere solcher Dichtringe in Form einer Packung in einer oder mehreren umlaufenden Nuten am Kolben angeordnet, wodurch die Dichtwirkung erhöht wird. Dabei sind für spezielle Anwendungen auch Anordnungen mit Kolben ohne Dichtring bekannt, z.B., aber nicht nur, wenn kein besonders hoher Druck erzeugt werden soll.

Unter anderem durch die zuvor beschriebenen Massnahmen kann zwar eine relativ gute Abdichtung erreicht werden, jedoch treten durch den Kontakt zwischen Dichtring und der Lauffläche der Zylinderwand und / oder durch den Kontakt zwischen Kolben und der Lauffläche der Zylinderwand durch die Bewegung des Kolbens erhebliche Reibungskräfte auf, die zu minimieren sind.

Das geschieht bevorzugt durch die Verwendung eines Schmiermittels, wie zum Beispiel durch die Verwendung eines Schmieröls, wodurch die Reibung zwischen den gegeneinander bewegten Teilen ausreichend herabgesetzt werden kann. Darüber hinaus kann durch das Schmiermittel die Abdichtung am Kolbenumfang zusätzlich unterstützt werden.

Ganz gleich jedoch in welcher speziellen Anwendung oder Ausführungsform des Kompressors, gibt es bei diesen aus dem Stand der Technik bekannten Öl geschmierten Kompressoren erhebliche Probleme durch eine Verschmutzung der zu komprimierenden Gase durch das Schmiermittel.

Die Probleme auf Grund der Verschmutzung der Gase durch das Schmiermittel können dabei unterschiedlicher Natur sein. Beispielsweise wenn hoch reine Gase, zum Beispiel für den Laborbetrieb benötigt werden oder wenn es sich um komprimierte Gase handelt, die in hoch komplizierten Komponenten von Verbrennungssystemen verbrannt werden sollen, kann es zu Verschmutzungen von Systemkomponenten durch Schmieröl kommen. So können zum Beispiel bei Erdgas betriebenen Fahrzeugen Komponenten des Einspritzsystems, wie die Einspritzpumpe oder die Einspritzdüsen verschmutzt werden. Auch aus Gründen des Umweltschutzes ist häufig eine Verschmutzung des komprimierten Gases höchst unerwünscht, weil zum Beispiel das Schmiermittel als fein verteilter Nebel in die Umwelt gelangen kann oder das Schmiermittel mit verbrannt wird, z.B. bei einem Erdgas betriebenen Fahrzeug, wodurch schädliche Verbrennungsprodukte entstehen können. Neben Verschmutzungen, die unter anderem zu Verstopfungen oder Verengungen in feinen Hochdruckleitungen führen können, treten nicht selten Probleme mit verstärkter Korrosion, z.B. von Komponenten, wie metallischen Hochdruckleitungen, Düsen im System oder Pumpenteilen auf, da die Schmieröle auf bestimmte Stoffe physikalisch, chemisch oder thermisch aggressiv wirken können und so deren vorzeitigen Verschleiss bedingen können.

Ein weiteres ernstes Problem ist die Bildung von feinen Schmiermitteltröpfchen im komprimierten Gas. So kann es zum Beispiel vorkommen, dass das im komprimierten Gas verteile Schmiermittel zu den vorgenannten Tröpfchen kondensieren, die dann beim Entspannen des komprimierten Gases in einem sehr schnellen Gasstrom zu regelrechten Geschossen werden, die z.B. auf Wände oder Oberflächen von angeschlossenen Systemkomponenten treffen können und dort auf Grund ihrer hohen kinetischen Energie massive Schäden anrichten können.

Ein für die Praxis sehr wichtiges Beispiel bekannter Öl geschmierter Kompressoren, die im Betrieb im wesentlichen mit allen diesen Problemen mehr oder weniger konfrontiert sind, sind zum Beispiel Kompressoren zum Komprimieren von Luft zur Betätigung von Bremsen in Fahrzeugen. Zu nennen sind hier insbesondere, aber nicht nur, Bremssysteme von Schienenfahrzeugen, Luftfahrzeugen, Personen- oder Lastkraftwagen. Solche Bremssysteme sind seit langen wohl bekannt und werden in der Regel mit Druckluft betrieben, die in einem Druckvorratsbehälter zur Verfügung gestellt wird. Der Druck im Vorratsbehälter wird dabei durch einen geeigneten Kompressor aufrechterhalten bzw. aufgebaut, der entweder einen eigenen Antrieb, z.B. einen Elektromotor hat, oder an die Antriebsmaschine des Fahrzeugs gekoppelt ist oder auf andere Weise angetrieben sein kann.

Bei den vorgenannten Bremssystemen spielt neben erhöhtem Verschleiss insbesondere natürlich die Betriebssicherheit eine entscheidende Rolle, die durch Verschmutzungen der Druckluft mit Schmiermittel beeinträchtigt werden kann und im schlimmsten Fall zu einem Ausfall des Bremssystems führen kann.

Wünschenswert wäre es daher, einen trocken laufenden Kompressor einzusetzen, das heisst einen Kompressor, der kein Schmiermittel zwischen Dichtring und der Lauffläche der Zylinderwand des Kompressionsraums und / oder zwischen dem Kompressionskolben und der Lauffläche der Zylinderwand des Kompressionsraums für einen sicheren Betrieb des Kompressors benötigt.

Im Prinzip sind zwar zum Beispiel keramische Alumina Beschichtungen seit längerem als Verschleissschutzschichten oder auch als elektrische Isolatoren bekannt. Dabei wird um die Sprödigkeit des Alumina zu verringern zum Beispiel TiO₂ als Legierungselement zugegeben. Um die Zähigkeit des spröden Alumina zu erhöhen ist es andererseits auch bekannt, ZrO₂ zuzugeben, so das durch eine mit einer Volumenänderung gekoppelten Umwandlung (von tetragonal nach monoklin) in eine Zirkonia Phase die Zähigkeit gegenüber dem reinen Alumina erhöht wird Die Erhöhung der Zähigkeit beruht dabei auf Druckspannungen, die durch die Umwandlung in die Zirkonia Phase in einer aufgespritzten Beschichtung beim Abkühlen nach dem Spritzvorgang erzeugt werden.

Allerdings geht die verbesserte Zähigkeit bei den aus dem Stand der Technik bekannten Werkstoffen immer auf Kosten der Schichten, so dass diese insbesondere für Beschichtungen von Teilen, die in trockenem, also nicht mit Schmiermitten geschmiertem reibendem Kontakt stehen, ungeeignet sind, bzw. eine begrenzte Lebensdauer aufweisen. Diese sind als Beschichtung in einem trocken laufenden Kompressor sehr schlecht geeignet, da die verminderte Härte schnell zur Bildung von Verschleissspuren führt, so dass der Kompressionsraum schon nach kurzer Betriebsdauer nicht mehr ausreichend abgedichtet ist. Das heisst, ein Teil der im Kompressionsraum komprimierten Luft kann durch Furchen, die sich zum Beispiel in der beschichteten Lauffläche des Kompressionszylinders aufgrund der geringen Härte der Schicht ausbilden, entweichen, so dass nicht mehr der notwendige Arbeitsdruck aufgebaut werden kann.

Zumindest ebenso ungeeignet sind Schichten, deren Zähigkeit nicht durch Zugabe weiterer Legierungsbestandteile wie Zirkonia erhöht wurde. Solche Schichten sind zu wenig zäh und somit zu spröde, so dass unter mechanischer und thermischer Belastung die Schichten schnell zum Verschleissen, zum Beispiel durch die Bildung von Brüchen, Rissen oder Furchen in der Oberfläche führen können.

Die Aufgabe der Erfindung ist es daher, einen Werkstoff und ein Verfahren zur Bildung einer Oberflächenschicht auf einem Kompressor mittels thermischen Beschichtens vorzuschlagen, mit dem insbesondere eine Verbesserung der Zähigkeit bei gleichzeitig deutlich erhöhter Härte und mechanischer Festigkeit der mit dem Werkstoff gespritzten Oberflächenschicht erreicht wird, und die zusätzlich sehr gute tribologische Eigenschaften haben

Die Aufgabe der Erfindung besteht darin, einen Kompressor, insbesondere einen Hubkolbenkompressor vorzuschlagen, welcher deutlich höhere Standzeiten und verlängerte Wartungsintervalle hat, wobei gleichzeitig eine Verschmutzung eines zu komprimierenden Mediums mit Schmiermitteln unterbleibt.

Die diese Aufgaben in apparativer und verfahrenstechnischer Hinsicht lösenden Gegenstände der Erfindung sind durch die Merkmale der unabhängigen Ansprüche der jeweiligen Kategorie gekennzeichnet.

Die jeweiligen abhängigen Ansprüche beziehen sich auf besonders vorteilhafte Ausführungsformen der Erfindung.

Die Erfindung betrifft somit einen Kompressor, insbesondere einen ölfreien Kompressor zur Komprimierung eines Fluids, umfassend einen beweglich in einem Kompressionsraum angeordneten Kompressionskolben sowie eine mittels thermischen Spritzens aufgebrachte Oberflächenschicht, umfassend zwischen 40% und 80% Gewichtsprozent Al₂O₃ und zwischen 10% und 40% Gewichtsprozent ZrO₂, wobei die Oberflächenschicht zur gleichzeitigen Optimierung von Härte und Zähigkeit der Oberflächenschicht zusätzlich zwischen 5% und 35% Gewichtsprozent Cr₂O₃ enthält.

Durch die Zugabe von Chromoxid zu der Zusammensetzung aus Aluminiumoxid, und Zirkonoxid wird neben einer hohen Härte und einer deutlich verringerter Sprödigkeit die Zähigkeit einer gespritzten Oberflächenschicht erheblich verbessert. D.h. durch den erfindungsgemässen Werkstoff zum thermischen Beschichten wird gleichzeitig die Zähigkeit die Härte und die mechanische Festigkeit optimiert. Es hat sich weiterhin gezeigt, dass eine erfindungsgemäss gespritzte Oberflächenschicht ausgezeichnete tribologische Trockenlauf Eigenschaften aufweist. D.h., wenn beispielsweise eine Lauffläche eines Zylinders mit einem erfindungsgemässen Werkstoff beschichtet wird, so kann auch unter extremen Belastungen ein Kolben in diesem Zylinder ohne ein zusätzliches fluides Schmiermittel geführt werden, ohne dass übermässige Reibungsverluste auftreten. Die Lebensdauer der Schicht ist dabei im Vergleich zu bekannten Schichten sehr deutlich erhöht, die Bildung von Riefen oder Furchen, bzw. das Auftreten von Rissen oder Brüchen ist über sehr lange Betriebszeiten praktisch ausgeschlossen.

Damit eignet sich der Werkstoff zur Beschichtung von Zylinderwänden in Kompressionsräumen von Kompressoren, insbesondere von Gaskompressoren, wie sie bei Bremsen von Kraftfahrzeugen, Personen- oder Lastkraftwagen, Schienenfahrzeugen oder Luftfahrzeugen, wie Flugzeugen, zum Einsatz kommen. Dabei ist das Spektrum der möglichen Einsatzgebiete viel weiter gefasst. Der Werkstoff eignet sich grundsätzlich in allen Anwendungen, in denen zwei Werkstücke ohne Verwendung von Schmiermitteln, wie zum Beispiel Schmierölen, in reibendem Kontakt gegeneinander geführt oder bewegt werden.

In einem bevorzugten Ausführungsbeispiel enthält der Werkstoff zusätzlich Yttriumoxid. Die Zugabe von Yttriumoxid erlaubt eine Teilstabilisierung der Zirconia Phase und erlaubt eine moderate bzw. wählbare Bildung der Druckspannung in den gespritzten Schichten.

In einem anderen Ausführungsbeispiel enthält der Werkstoff zusätzlich und / oder alternativ zu Yttriumoxid noch Titanoxid, was durch Bildung von AlₓTi_{y}O_{z}Crₐ Mischkristallen zu einer weiteren Verbesserung der Zähigkeit führt. Dabei ist das Aluminiumoxid Al₂O₃, das Titanoxid bevorzugt TiO₂, das Zirkonoxid ZrO₂, das Chromoxid Cr₂O₃ und das Yttriumoxid bevorzugt Y₂O₃.

Der Chromoxid Anteil liegt zwischen 5% und 35% Gewichtsprozent, der Zirkonoxid Anteil zwischen 10% und 40% Gewichtsprozent und der Aluminiumoxid Anteil liegt zwischen 40% und 80% Gewichtsprozent. Zusätzlich kann Titanoxid in einem Anteil bis zu 20% Gewichtsprozent anwesend sein.

Es versteht sich, dass der Werkstoff erfindungsunwesentliche Verunreinigungen enthalten kann.

Der Werkstoff wird dabei bevorzugt als Spritzpulver bereitgestellt, so dass er in einem thermischen Spritzpulver-Verfahren eingesetzt werden kann. Dazu wird der Werkstoff durch Schmelzen und / oder Giessen und anschliessendes Brechen und / oder Sieben zu einem thermischen Spritzpulver verarbeitet

Es versteht sich, dass aus den zuvor beschriebenen Werkstoffen oder jeder geeigneten Kombination aus diesen zum Beispiel auch Spritzdrähte zum thermischen Spritzen herstellbar sind oder der Werkstoff in jeder anderen geeigneten Form zum thermischen Spritzen bereitgestellt werden kann. Wird der Werkstoff als thermisches Spritzpulver hergestellt, so beträgt die Partikelgrössse des Spritzpulvers in einem speziellen Ausführungsbeispiel zwischen 1µm und 90µm, vorzugsweise zwischen 5µm und 45µm.

Die durch thermisches Spritzen aufgebrachte Oberflächenschicht ist auf Basis einer Oxidkeramik umfassend Aluminiumoxid, und Zirkonoxid, wobei die Oberflächenschicht zur gleichzeitigen Optimierung von Härte und Zähigkeit zusätzlich Chromoxid enthält.

In weiteren bevorzugten Ausführungsbeispielen kann die Oberflächenschicht zusätzlich Yttriumoxid und / oder Titanoxid enthalten.

Der Chromoxid Anteil in der Oberflächenschicht liegt zwischen 5% und 35% Gewichtsprozent, der Zirkonoxid Anteil zwischen 10% und 40% Gewichtsprozent und der Aluminiumoxid Anteil zwischen 40% und 80% Gewichtsprozent. Zusätzlich kann bis zu 20% Gewichtsprozent Titanoxid enthalten sein.

Das Cr₂O₃ ist dabei in Alumina löslich und es hat sich gezeigt, dass dabei sowohl die Härte, als auch die Tribofähigkeit des Systems, das heisst insbesondere die Reibung unter Trockenlaufbedingungen deutlich reduziert wird. Durch die Zugabe von Titanoxid TiO₂ werden die Gleiteigenschaften deutlich verbessert, während Yttriumoxid Y₂O₃ die Bildung der spröden monoklinen Phase von ZrO₂ unterdrückt bzw. verhindert. Es versteht sich, dass die Oberflächenschicht weiterhin erfindungsunwesentliche Verunreinigungen in unwesentlichen Mengen enthalten kann. Das Aluminiumoxid Al₂O₃ liegt dabei in der Oberflächenschicht bevorzugt als kristalline Alumina α-Phase und / oder als kristalline Alumina γ-Phase vor und / oder das ZrO₂ liegt bevorzugt als monokline Phase und / oder als tetragonale Phase vor.

Die Oberflächenschicht weist dabei eine gegenüber dem Stand der Technik deutlich verbesserte Mikrohärte HV_{0.3} auf, die bevorzugt zwischen 500 HV_{0.3} und 1200 HV_{0.3}, im Speziellen zwischen 800 HV_{0.3} und 850 HV_{0.3} liegt.

In der folgenden Tabelle sind drei verschiedene Ausführungsbeispiele F6350, F6351 und F 6352 erfindunggemässer innenbeschichtungen von Zylinderwänden von Hubkolbenkompressoren exemplarisch dargestellt und einer bekannten Referenzbeschichtung AMDRY 6350 zum Vergleich gegenübergestellt. Insbesondere fällt dabei die deutlich verbesserte Härte der erfindungsgemässen Oberflächenschichten auf, die vor allem auf die Zugabe von Cromoxid zurückzuführen ist. Die Schichten wurden sämtlich mit einem atmosphärischen Plasmaspritzverfahren (APS Verfahren) mit einem Sulzer Metco Plasmaspritzbrenner vom Typ F 300 gespritzt.

| Schichtwerkstoff- und Oberflächencharakteristiken bei Innenbeschichtung im Durchmesser 50 bis 60mm, APS Verfahren, Plasmaspritzbrenner SM F 300 | | | | | | | |
|---|---|---|---|---|---|---|---|
| Bezeichnung | Chemische Zusammensetzung [Gewicht %] | | | | | Mikrohärte [HV_{0.3}] | Kristalline Hauptphasen |
| | Al₂O₃ | ZrO₂ | Cr₂O₃ | TiO₂ | Y₂O₃ | | |
| F6350 | 60 | 20 | 20 | - | - | 840 | Alumina α, Alumina γ, ZrO₂ monoklin, ZrO₂ tetragonal |
| F6351 | 55 | 15 | 20 | 10 | - | 845 | Alumina α, Alumina γ, ZrO₂ monoklin, ZrO₂ tetragonal |
| F6352 | 55 | 15 | 15 | 7.5 | 7.5 | 845 | Alumina α, Alumina γ, ZrO₂ tetragonal |
| AMDRY 6350 | 60 | 40 | - | - | - | 700 | Alumina α, Alumina γ, ZrO₂ monoklin, ZrO₂ tetragonal |

In einem für die technische Praxis besonders wichtigen Ausführungsbeispiel umfasst der Kompressor einen von einem Zylinder begrenzten Kompressionsraum mit einer Zylinderwand, die mit einer Oberflächenschicht gemäss der vorliegenden Erfindung versehen ist, und in welchem Zylinder ein Hubkolben zur Komprimierung des Fluids hin und her bewegbar angeordnet ist.

Dabei muss der Kompressor nicht notwendigerweise ein Hubkolbenkompressor sein, sondern der Kompressor kann auch ein anderer Schmierölfreier Kompressor, wie zum Beispiel ein Kreiskolbenkompressor oder ein Komprompressor anderer Bauart sein.

Die Erfindung wird im folgenden an Hand der Zeichnung näher erläutert.

Es zeigt:

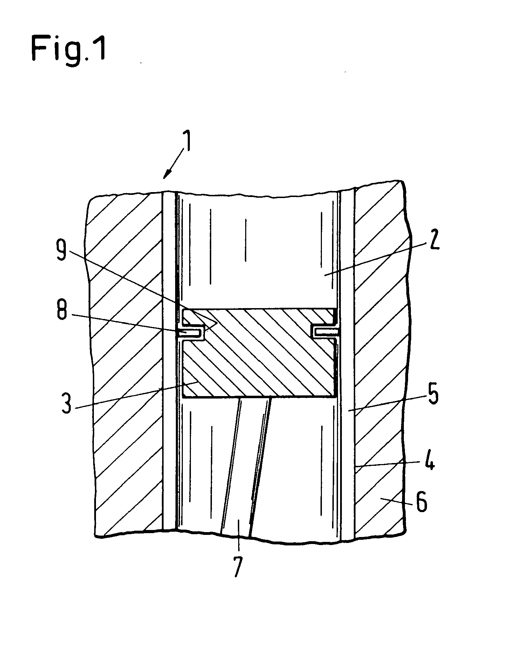

- Fig. 1: Einen Hubkolbenkompressor mit einer erfindungsgemässen Oberflächenschicht.

Fig. 1 zeigt in einer schematischen Darstellung einen Hubkolbenkompressor mit einer Oberflächenschicht gebildet aus dem erfindungsgemässen Werkstoff.

Ein für die Praxis besonders wichtiges Ausführungsbeispiel eines erfindungsgemässen Kompressors, der im folgenden gesamthaft mit dem Bezugszeichen 1 bezeichnet wird, ist schematisch im Schnitt in Fig. 1 dargestellt.

Der Hubkolbenkompressor 1 umfasst in an sich bekannter Weise im wesentlichen einen Zylinder 6 in welchem ein Kompressionsraum 2

Fig. 1 zeigt in einer schematischen Darstellung einen Hubkolbenkompressor mit einer Oberflächenschicht gebildet aus dem erfindungsgemässen Werkstoff.

Ein für die Praxis besonders wichtiges Ausführungsbeispiel eines erfindungsgemässen Kompressors, der im folgenden gesamthaft mit dem Bezugszeichen 1 bezeichnet wird, ist schematisch im Schnitt in Fig. 1 dargestellt.

Der Hubkolbenkompressor 1 umfasst in an sich bekannter Weise im wesentlichen einen Zylinder 6 in welchem ein Kompressionsraum 2 ausgebildet ist, in welchem zum Komprimieren eines Gases ein Kolben 3, ganz ähnlich wie bei einer Hubkolbenbrennkraftmaschine, hin- und herbewegbar angeordnet ist. Der Kompressionsraum 2 wird durch die Zylinderwand 4, den darin beweglich angeordneten Kolben 3 und einen hier nicht dargestellten Zylinderdeckel begrenzt. Die Bewegung des Kolbens 3 im Zylinder 6 wird über eine mit einer ebenfalls nicht dargestellten Kurbelwelle verbundene Pleuelstange 7 generiert, wobei die Kurbelwelle zum Beispiel über einen Motor, z.B. einen Elektromotor oder durch Kopplung an einen Verbrennungsmotor oder an eine andere Antriebseinheit, angetrieben wird.

Wenn der Kolben 3 sich in der Nähe einer unteren Totpunkstellung befindet, wird in den Kompressionsraum 2 das zu komprimierende Gas eingeleitet und während eines anschliessenden Kompressionshubes, bei welchem das Volumen des Kompressionsraum 2 durch eine Bewegung des Kolbens 3 in Richtung seiner oberen Totpunktstellung stark verkleinert wird, das Gas im sich verkleinernden Volumen des Kompressionsraums 2 zu einem höheren Druck komprimiert. In der Nähe des oberen Totpunkts wird dann das unter dem erhöhten Druck stehende Gas in bekannter Weise über ein nicht dargestelltes Ventil z.B. in eine weitere Kompressionsstufe zur weiteren Druckerhöhung weitergeleitet oder, wenn der Druck genügend hoch ist, beispielsweise einem Druckbehälter zugeführt, wo es dann zur weiteren Verwendung zur Verfügung steht.

Damit beim Kompressionshub des Kolbens 3, das heisst bei der Verkleinerung des Volumens des Kompressionsraums 2 durch die Bewegung des Kolbens in Richtung des oberen Totpunkt, ein genügend hoher Druck erzeugt werden kann, verfügt der in Fig. 1 dargestellte Kolben 3 über einen als Kolbenring 8 ausgestalteten Dichtring 8, die in wohl bekannter Weise in einer um den Kolben 3 umlaufenden Nut 9 eingebettet ist und bevorzugt unter einer gewissen radialen Vorspannung steht, so dass der Dichtring 8 mit einer vorgebbaren Kraft gegen die Lauffläche der Zylinderwand 4 gepresst wird, wodurch ein dichtender Effekt hervorgerufen wird, so dass das im Zylinder 6 eingeschlossene Gas auf einen vorgebbaren Druck komprimierbar ist. Bevorzugt, aber nicht notwendig, ist der Dichtring 8 aus einem speziellen Kunststoff aufgebaut, der den hohen Anforderungen, insbesondere an thermische und tribologische Beanspruchungen, sowie an die bestehenden Gasdruckverhältnise optimal angepasst ist. Selbstverständlich kann der Dichtring 8 auch aus jedem anderen Werkstoff bestehe, z.B. aus geeigneten Metallen, Metallegierungen, Verbundwerkstoffen oder anderen geeigneten Materialien.

Im vorliegenden Beispiel der Fig. 1 ist aus Gründen der Übersichtlichkeit lediglich ein Dichtring 8 dargestellt. Es versteht sich, dass je nach Anwendung auch mehrere solcher Dichtringe 8 z.B. in Form einer Packung in einer oder mehreren umlaufenden Nuten 9 am Kolben 3 angeordnet sein können, wodurch die Dichtwirkung erhöht wird. Dabei sind für spezielle Anwendungen auch Anordnungen mit Kolben 3 ohne Dichtring 8 bekannt, z.B., aber nicht nur, wenn kein besonders hoher Druck erzeugt werden soll.

Erfindungsgemäss ist die Zylinderwand 4 des Kompressors 1 mit einer Oberflächenschicht 5 versehen, die auf Basis einer Oxidkeramik mindestens Aluminiumoxid, Zirkonoxid und zur gleichzeitigen Optimierung von Härte und Zähigkeit zusätzlich Chromoxid enthält.

Die Oberflächenschicht 5 ist dabei bevorzugt, aber nicht notwendig, nach dem Aufspritzen durch Schleifen Honen oder andere Massnahmen nachbearbeitet, so dass eine optimale Anpassung des Dichtrings 8 an die Oberflächenschicht 5 erreicht wird, so dass sowohl die Dichtwirkung als auch die Laufeigenschaften, insbesondere die tribologischen Eigenschaften optimiert sind und die auftretenden Reibungskräfte minimiert sind.

Ein Werkstoff auf Basis einer Oxidkeramik zur Herstellung einer Oberflächenschicht mittels thermischen Beschichtens, mit welcher gleichzeitig die Härte und Zähigkeit der einer damit gespritzten Oberflächenschicht optimiert wird und gleichzeitig hervorragende Trockenlaufeigenschaften aufweist, wird verwendet.

Das wird durch die Zugabe von Chromoxid zu einer Zusammensetzung aus Aluminiumoxid, und Zirkonoxid erreicht, so dass neben einer hohen Härte und einer deutlich verringerter Sprödigkeit die Zähigkeit einer gespritzten Oberflächenschicht erheblich verbessert.

Wenn beispielsweise eine Lauffläche eines Zylinders mit dem in Anspruch 1 erwähnten Werkstoff beschichtet wird, so kann auch unter extremen Belastungen ein Kolben in diesem Zylinder ohne ein zusätzliches fluides Schmiermittel geführt werden, ohne dass übermässige Reibungsverluste auftreten. Die Lebensdauer der Schicht ist dabei im Vergleich zu bekannten Schichten sehr deutlich erhöht, die Bildung von Riefen oder Furchen, bzw. das Auftreten von Rissen oder Brüchen ist über sehr lange Betriebszeiten praktisch ausgeschlossen und darüberhinaus wird im Zusammenspiel mit einem Kompressionskolben und eventuell weiteren Dichtungskomponenten, wie beispielsweise Kolbenringen, eine hervorragende Dichtwirkung gegenüber dem Kompressionsraum erzielt, in welchem das zu komprimierende Gas im Betriebszustand des Kompressors komprimiert wird. Damit eignet sich der Werkstoff zur Beschichtung von Zylinderwänden in Kompressionsräumen von Kompressoren, insbesondere von Gaskompressoren, wie sie bei Bremsen von Kraftfahrzeugen, Personen- oder Lastkraftwagen, Schienenfahrzeugen oder Luftfahrzeugen, wie Flugzeugen, zum Einsatz kommen. Das Spektrum der möglichen Einsatzgebiete ist breiter, da sich der Werkstoff grundsätzlich in allen Anwendungen, in denen zwei Werkstücke ohne Verwendung von Schmiermitteln, wie zum Beispiel Schmierölen, in reibendem Kontakt gegeneinander geführt oder bewegt werden erfolgreich eingesetzt werden kann.

## Patentansprüche

1. Kompressor, insbesondere ölfreier Kompressor zur Komprimierung eines Fluids, umfassend einen beweglich in einem Kompressionsraum (2) angeordneten Kompressionskolben (3), **dadurch gekennzeichnet, dass** auf einer Begrenzungswand (4) des Kompressionsraums (2) eine durch thermisches Spritzen aufgebrachte Oberflächenschicht (5) auf Basis einer Oxidkeramik umfassend zwischen 40% und 80% Gewichtsprozent Al₂O₃ und zwischen 10% und 40% Gewichtsprozent ZrO₂ vorgesehen ist, wobei die Oberflächenschicht zur gleichzeitigen Optimierung von Härte und Zähigkeit zusätzlich zwischen 5% und 35% Gewichtsprozent Cr₂O₃ enthält.

2. Kompressor nach Anspruch 1, wobei die Oberflächenschicht zusätzlich Yttriumoxid, bevorzugt Y₂O₃, im Speziellen bis zu 20% Gewichtsprozent und / oder Titanoxid, bevorzugt TiO₂, im Speziellen bis zu 20% Gewichtsprozent TiO₂ enthält.

3. Kompressor nach einem der Ansprüche 1 oder 2, wobei Al₂O₃ als kristalline Alumina α-Phase und / oder als kristalline Alumina γ-Phase in der Oberflächenschicht (5) vorliegt.

4. Kompressor nach einem der Ansprüche 1 bis 3, wobei ZrO₂ als monokline Phase und / oder als tetragonale Phase vorliegt.

5. Kompressor nach einem der Ansprüche 1 bis 4, wobei die Oberflächenschicht (5) eine Mikrohärte HV_{0.3} zwischen 500 HV_{0.3} und 1200 HV_{0.3}, bevorzugt zwischen 800 HV_{0.3} und 850 HV_{0.3} aufweist.

6. Kompressor nach Anspruch 5, wobei der Kompressor ein Hubkolbenkompressor ist, umfassend einen von einem Zylinder (6) begrenzten Kompressionsraum (2) mit einer Zylinderwand (4), die mit der Oberflächenschicht (5) versehen ist, und in welchem Zylinder (2) ein Hubkolben (3) zur Komprimierung des Fluids hin und her bewegbar angeordnet ist, wobei ein Durchmesser des Zylinders bevorzugt zwischen 40 mm und 80 mm, im Speziellen zwischen 50 mm und 60 mm liegt.

7. Verwendung eines Werkstoff zur Herstellung einer Oberflächenschicht (5) mittels thermischen Beschichtens auf einer Begrenzungswand (4) eines Kompressionsraums (2) eines Kompressors (1) nach einem der Ansprüche 1 bis 6, wobei der Werkstoff ein Werkstoff auf Basis einer Oxidkeramik ist, umfassend zwischen 40% und 80% Gewichtsprozent Al₂O₃ und zwischen 10% und 40% Gewichtsprozent ZrO₂, wobei der Werkstoff zur gleichzeitigen Optimierung von Härte und Zähigkeit der Oberflächenschicht (5) zusätzlich zwischen 5% und 35% Gewichtsprozent Cr₂O₃ enthält.

8. Verwendung eines Werkstoffs nach Anspruch 7, wobei der Werkstoff zusätzlich Yttriumoxid, bevorzugt Y₂O₃, im Speziellen bis zu 20% Gewichtsprozent und / oder Titanoxid, bevorzugt TiO₂, im Speziellen bis zu 20% Gewichtsprozent TiO₂ enthält.

9. Verwendung eines Werkstoffs nach einem der Ansprüche 7 oder 8, wobei der Werkstoff ein durch Schmelzen und / oder Giessen und anschliessendem Brechen und / oder Sieben hergestelltes thermisches Spritzpulver ist.

10. Verwendung eines Werkstoff nach Anspruch 9, wobei die Partikelgrössse des Spritzpulvers zwischen 1µm und 90µm, vorzugsweise zwischen 5µm und 45µm liegt.

11. Beschichtungsverfahren zum Aufbringen einer Oberflächenschicht (5) auf einem Kompressor (1) nach einem der Ansprüche 1 bis 6, unter Verwendung eines Werkstoffs nach einem der Ansprüche 7 bis 10, wobei das Beschichtungsverfahren ein atmosphärisches Plasmaspritzverfahren, ein Niederdruck Plasmaspritzverfahren, Flammspritzverfahren, oder ein Hochgeschwindigkeitsflammspritzverfahren ist.

## Claims

1. A compressor, in particular an oil-free compressor for the compression of a fluid, comprising a compression piston (3) movably disposed in a compression chamber (2), **characterized in that** a surface layer (5) is provided on a boundary wall (4) of the compression chamber (2), said surface layer being applied by thermal spraying, being on an oxide ceramic base and comprising between 40% and 80% by weight of Al₂O₃ and between 10% and 40% by weight of ZrO₂, wherein the surface layer additionally includes between 5% and 35% by weight Cr₂O₃ for the simultaneous optimization of the hardness and toughness.

2. A compressor in accordance with claim 1, wherein the surface layer additionally includes yttrium oxide, preferably Y₂O₃, especially up to 20% by weight, and/or titanium oxide, preferably TiO₂, especially up to 20% by weight TiO₂.

3. A compressor in accordance with one of the claims 1 or 2, wherein Al₂O₃ is present in the surface layer (5) as a crystalline alumina α-phase and/or as a crystalline alumina γ-phase.

4. A compressor in accordance with any one of the claims 1 to 3, wherein ZrO₂ is present as a monoclinic phase and/or as a tetragonal phase.

5. A compressor in accordance with any one of the claims 1 to 4, wherein the surface layer (5) has a micro-hardness HV_{0.3} between 500 HV_{0.3} and 1200 HV_{0.3}, preferably between 800 HV_{0.3} and 850 HV_{0.3}.

6. A compressor in accordance with claim 5, wherein the compressor is a reciprocating piston compressor, comprising a compression chamber (2) bounded by a cylinder (6) and having a cylinder wall (4) which is provided with the surface layer (5) and in which cylinder (2) a reciprocating piston (3) is arranged movably to and fro for the compression of the fluid, wherein a diameter of the cylinder preferably lies between 40 mm and 80 mm, especially between 50 mm and 60 mm.

7. Use of a material for manufacturing a surface layer (5) by means of thermal coating on a boundary wall (4) of a compression chamber (2) of a compressor 1 in accordance with any one of the claims 1 to 6, wherein the material is a material on an oxide ceramic base, comprising between 40% and 80% by weight of Al₂O₃ and between 10% and 40% by weight of ZrO₂, wherein the material additionally includes between 5% and 35% by weight Cr₂O₃ for the simultaneous optimization of the hardness and toughness of the surface layer (5).

8. Use of a material in accordance with claim 7, wherein the material additionally includes yttrium oxide, preferably Y₂O₃, especially up to 20% by weight, and/or titanium oxide, preferably TiO₂, especially up to 20% by weight TiO₂.

9. Use of a material in accordance with one of the claims 7 or 8, wherein the material is a thermal spray powder manufactured by melting and/or casting and subsequent breaking and/or screening.

10. A material in accordance with claim 9, wherein the particle size of the spray powder lies between 1 µm and 90 µm, preferably between 5 µm and 45 µm.

11. A coating process for the application of a surface layer (5) to a compressor (1) in accordance with any one of the claims 1 to 6, using a material in accordance with any one of the claims 7 to 10, wherein the coating process is an atmospheric plasma spraying process, a low-pressure plasma spraying process, a flame spraying process or a high speed flame spraying process.

## Revendications

1. Compresseur, notamment compresseur sans huile pour la compression d'un fluide, comprenant un piston de compression (3) agencé de manière mobile dans une chambre de compression (2), **caractérisé en ce qu'**une couche de surface (5) à base d'une céramique oxydée comprenant entre 40 % et 80 % en poids d'Al₂O₃ et entre 10 % et 40 % en poids de ZrO₂, appliquée par pulvérisation thermique, est prévue sur une paroi de délimitation (4) de la chambre de compression (2), la couche de surface contenant en outre, pour l'optimisation simultanée de la dureté et de la ténacité, entre 5 % et 35 % en poids de Cr₂O₃.

2. Compresseur selon la revendication 1, dans lequel la couche de surface contient en outre de l'oxyde d'yttrium, de préférence Y₂O₃, particulièrement jusqu'à 20 % en poids, et/ou de l'oxyde de titane, de préférence TiO₂, particulièrement jusqu'à 20 % en poids de TiO₂.

3. Compresseur selon l'une quelconque des revendications 1 ou 2, dans lequel Al₂O₃ se présente dans la couche de surface (5) sous la forme d'une phase α d'alumine cristalline et/ou sous la forme d'une phase y d'alumine cristalline.

4. Compresseur selon l'une quelconque des revendications 1 à 3, dans lequel ZrO₂ se présente sous la forme d'une phase monoclinique et/ou d'une phase tétragonale.

5. Compresseur selon l'une quelconque des revendications 1 à 4, dans lequel la couche de surface (5) présente une microdureté HV_{0,3} comprise entre 500 HV_{0,3} et 1 200 HV_{0,3}, de préférence entre 800 HV_{0,3} et 850 HV_{0,3}.

6. Compresseur selon la revendication 5, dans lequel le compresseur est un compresseur à piston alternatif, comprenant une chambre de compression (2) délimitée par un cylindre (6) à paroi cylindrique (4), qui est munie d'une couche de surface (5), un piston à mouvement alternatif (3) étant agencé de manière mobile par un mouvement de va-et-vient dans le cylindre (2) pour la compression du fluide, un diamètre du cylindre étant de préférence compris entre 40 mm et 80 mm, particulièrement entre 50 mm et 60 mm.

7. Utilisation d'un matériau pour la fabrication d'une couche de surface (5) par revêtement thermique sur une paroi de délimitation (4) d'une chambre de compression (2) d'un compresseur (1) selon l'une quelconque des revendications 1 à 6, le matériau étant un matériau à base d'une céramique oxydée, comprenant entre 40 % et 80 % en poids d'Al₂O₃ et entre 10 % et 40 % en poids de ZrO₂, le matériau contenant en outre, pour l'optimisation simultanée de la dureté et de la ténacité de la couche de surface (5), entre 5 % et 35 % en poids de Cr₂O₃.

8. Utilisation d'un matériau selon la revendication 7, dans laquelle le matériau contient en outre de l'oxyde d'yttrium, de préférence Y₂O₃, particulièrement jusqu'à 20 % en poids, et/ou de l'oxyde de titane, de préférence TiO₂, particulièrement jusqu'à 20 % en poids de TiO₂.

9. Utilisation d'un matériau selon l'une quelconque des revendications 7 ou 8, dans laquelle le matériau est une poudre thermique à pulvériser préparée par fusion et/ou coulage, puis broyage et/ou tamisage.

10. Utilisation d'un matériau selon la revendication 9, dans laquelle la taille de particule de la poudre à pulvériser est comprise entre 1 µm et 90 µm, de préférence entre 5 µm et 45 µm.

11. Procédé de revêtement pour l'application d'une couche de surface (5) sur un compresseur (1) selon l'une quelconque des revendications 1 à 6, par utilisation d'un matériau selon l'une quelconque des revendications 7 à 10, le procédé de revêtement étant un procédé de pulvérisation plasma atmosphérique, un procédé de pulvérisation plasma basse pression, un procédé de pulvérisation en flamme ou un procédé de pulvérisation en flamme à vitesse élevée.
